# EUROPÄISCHE PATENTSCHRIFT

(11) **EP 1 198 678 B1**
(45) Veröffentlichungstag und Bekanntmachung des Hinweises auf die Patenterteilung: **26.03.2008**
(21) Anmeldenummer: 00951320.1
(22) Anmeldetag: 30.06.2000
(51) Int. Cl.: F16D 65/16, F16J 1/00

(54) **KOLBEN FÜR EINEN HYDRAULISCHEN DRUCKRAUM**
PISTON FOR A HYDRAULIC PRESSURE CHAMBER
PISTON POUR UNE CHAMBRE DE PRESSION HYDRAULIQUE

(30) Priorität: 02.07.1999 DE 19930457; 24.08.1999 DE 19939873
(43) Veröffentlichungstag der Anmeldung: 24.04.2002
(73) Patentinhaber: Continental Teves AG & Co. oHG, 60488 Frankfurt (DE); FIRMA SANDER KG GmbH & Co., D-77871 Renchen-Ulm (DE)
(72) Erfinder: HENDRICH, Uwe, D-61449 Steinbach (DE); WEILER, Rolf, D-65817 Eppstein (DE); SCHNEIDER, Peter, D-65428 Rüsselsheim (DE); ZEIBIG, Uwe, D-77855 Achern (DE)
(86) Internationale Anmeldenummer: PCT/EP2000/006097
(87) Internationale Veröffentlichungsnummer: WO 2001/002745

(56) Entgegenhaltungen:
- EP-A- 0 304 103
- DE-A- 4 003 731
- US-A- 5 105 917

## Beschreibung

Die vorliegende Erfindung betrifft einen Kolben für einen hydraulischen Druckraum, insbesondere eine Kolbenbohrung einer hydraulischen Bremse gemäß dem Oberbegriff des Patentanspruchs 1. Aus der DE 40 03 731 A1 ist bereits ein kaltverformter Kolben für eine hydraulisch arbeitende Bremse bekannt, der vorzugsweise im Tiefziehverfahren hergestellt ist, und welcher im Vergleich zu, aus dem Stand der Technik bekannten, gegossenen Kolben verhältnismäßig dünnwandig und damit leichter gestaltet ist. Um die Wände des Kolbens bei einer Kraftbeaufschlagung vor Verformung zu schützen, besitzt der bekannte Kolben einen gewölbten Boden und eine an seinem Umfang einrollierte Nut, welche die Form des Kolbens versteifen. Durch die dünnwandige Ausführung derartiger Stahlkolben gegenüber solchen im Graugußverfahren hergestellten ergibt sich, daß auch die stirnseitige Anlagefläche des Topfrandes am offenen Kolbenende am Bremsbelag erheblich verkleinert istgegenüber gegossenen Kolben. Die Folge ist ein hoher Flächendruck, welcher nicht wünschenswert ist. Darüber hinaus hat sich gezeigt, daß ein derartiger Kolben insbesondere bei dünnwandiger Gestaltung unter Belastung unzulässig hohe Verformungen aufweist.

In der gattungsgemäßen EP 0 304 103 wird ein Kolben für eine hydraulischen Bremse offenbart, welcher durch Kaltverformung, insbesondere durch Tiefziehen gefertigt wird. Dabei weist der Kolben einen gewölbten Boden auf, der entweder konkav oder konvex ist. Die Art der Wölbung des Bremsgehäuses ist durch die entsprechende Bodenwölbung vorgegeben, wobei die jeweiligen Wölbungen im Bremsgehäuse und im Kolbenboden aufeinander abgestimmt sind.

Ausgehend vom bekannten Stand der Technik besteht die Aufgabe der vorliegenden Erfindung darin, einen mittels eines einfachen Umformverfahrens herstellbaren Kolben anzugeben, der unter geringem Materialaufwand möglichst leicht gestaltet ist ohne die Belastbarkeit des Kolbens einzuschränken. Diese Aufgabe wird mit den Merkmalen des Patentanspruchs 1 gelöst, indem der Rand am offenen Kolbenende einen um die Kolbenachse umlaufenden gefalteten Abschnitt mit einer mehrfachen Wandstärke des Metallzuschnitts aufweist. Hieraus ergibt sich gegenüber bekannten Kolbenausführungen eine erhebliche Gewichtseinsparung unter Beibehaltung der erforderlichen Kolbenfestigkeit sowie Kolbensteifigkeit. Durch die Faltung am Rand mit einer vorzugsweise Verdopplung der Wandstärke des Metallzuschnitts wird gleichzeitig die am Rand ausgebildete kreisringförmige Anlagefläche vergrößert.

Eine vorteilhafte Weiterbildung der Erfindung beinhaltet, daß der Rand zumindest an seiner Anlagefläche durch eine mechanische Nachbearbeitung geglättet ist. Besonders vorteilhaft läßt sich der neue Kolben in einer hydraulisch arbeitenden Bremse einsetzen. Solche Bremskolben sind üblicherweise mit ihrem Kolbenboden dem hydraulischen Druck ausgesetzt und liegen mit der stirnseitigen Anlagefläche am offenen Kolbenende an einem Bremsbelag an. Dabei wird der Kolbenrand nach der spanlosen Umformung des rondenförmigen Metallzuschnitts an seiner Stirnfläche vorzugsweise einer mechanischen Nachbearbeitung der Stirnfläche unterzogen, um die Maßgenauigkeit der glatten Anlagefläche zu erhöhen. Die Anlagefläche ist durch die Faltung gegenüber der übrigen Querschnittsfläche der dünnen Kolbenwand vergrößert und vermindert damit die Flächenpressung am Bremsbelag durch den Kolben.

Gemäß einer anderen Lösung des Problems für einen Kolben, der als einseitig offener topfförmiger Hohlzylinder gestaltet ist und aus einem Metallzuschnitt konstanter Wandstärke in einem Umformverfahren hergestellt ist, mit einem von hydraulischem Druck beaufschlagbaren Boden und mit einer Kolbenwand, die an ihrem offenen Ende in einen Rand übergeht, der eine kreisringförmige Anlagefläche aufweist, wobei der Kolben in seinem Übergangsbereich zwischen dem Boden und der Kolbenwand einen um die Kolbenachse umlaufenden gefalteten Abschnitt aufweist, in dem die Dicke der Kolbenwand bzw. des Bodens gegenüber der Dicke der übrigen Kolbenwand bzw. des Bodens erhöht ist und der mehrfachen Wandstärke des Metallzuschnitts entspricht, ist vorgesehen, daß der Boden gewölbt ausgeführt ist, wobei die außenliegende Fläche des Bodens eine konvexe Wölbung aufweist, so daß im gefalteten Abschnitt die dreifache Wandstärke des Metallzuschnitts vorliegt. Diese Materialanhäufung bewirkt, daß der Kolben verstärkt ist und Belastungen im Betrieb optimal standhält.

In einer besonders günstigen Weiterbildung weist die Kolbenwand einen radialen, nach innen eingeformten Absatz auf. Des weiteren weist die Kolbenwand an ihrer außenliegenden Mantelfläche eine um die Kolbenachse umlaufende Nut auf, die vom Absatz und einem umgefalteten Abschnitt am Rand begrenzt wird. Eine derartige Nut kann im eingebauten Zustand des Kolbens in der hydraulischen Bremse insbesondere zur Aufnahme eines Dichtringes oder eines sonstigen Dichtelementes genutzt werden. Eine spanabhebende Nachbearbeitung des Kolbens zur Erstellung der Nut wie bei bisher bekannten Gußkolben kann damit entfallen. Gleichzeitig dient der umlaufende radiale Absatz auf der Innenseite der Kolbenwand als Abstützfläche für eine sich in das Kolbeninnere erstreckende Belaghaltefeder, die den Absatz hintergreifen kann.

Eine nähere Erläuterung des Erfindungsgedankens erfolgt nun anhand der Beschreibung eines in der Zeichnung dargestellten bevorzugten Ausführungsbeispiels.

Es zeigt:

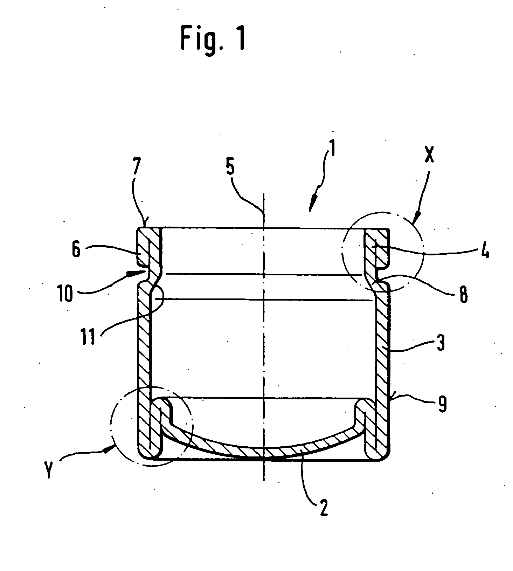

- Fig. 1: einen erfindungsgemäßen Kolben im Längsschnitt.

Fig. 1 zeigt einen Längsschnitt durch einen in einem Umformverfahren, vorzugsweise in einem spanlosen Kaltverformungsverfahren, aus einem Metallzuschnitt hergestellten Kolben 1 für eine hydraulische Bremse, insbesondere eine Teilbelagscheibenbremse für Kraftfahrzeuge. Der Metallzuschnitt besitzt vorteilhaft die Form einer Ronde von konstanter Wandstärke. Die Formgebung des Kolbens 1, der im wesentlichen als einseitig offener zylindrischer Topf gestaltet ist, erfolgt dabei vorzugsweise durch eine Tiefziehbearbeitung bzw. ein tiefziehähnliches Umformverfahren. Der Kolben 1 besitzt einen nach außen gewölbten Kolbenboden 2, der auf diese Weise gegen verformungen geschützt und damit zur Beaufschlagung mit hydraulischem Druck insbesondere innerhalb einer Kraftfahrzeugbremse geeignet ist, und eine Kolbenwand 3, die am offenen Ende des topfförmigen Kolbens 1 in einen Rand 4 übergeht.

An seinem Rand 4 am offenen Kolbenende besitzt der Kolben 1 einen gegenüber der Kolbenachse 5 um 180°umgefalteten umlaufenden Abschnitt 6. Durch den mit einer Faltung versehenen Abschnitt X ergibt sich am Rand 4 eine gegenüber der sonstigen Kolbenwand- bzw. Kolbenbodendicke vergrößerte Materialstärke, die bei einfacher Faltung der doppelten Wandstärke des Metallzuschnittes entspricht. Am Rand 4 ist eine kreisringförmige Anlagefläche 7 für einen nicht gezeigten Bremsbelag vorgesehen. Dabei ist die Anlagefläche 7 infolge der Faltung am Rand 4 größer als die sonstige Querschnittsfläche der Kolbenwand 3. Diese Anlagefläche 7 entspricht in ihrer Größe im wesentlichen der Größe der Anlagefläche, welche üblicherweise ein im Graugußverfahren hergestellter Kolben aufweist. Das heißt, daß für den erfinderisch gestalteten Kolben trotz seiner dünnwandigen Formgebung bei hydraulischer Druckbeaufschlagung gegenüber einem entsprechenden Gußkolben die gleiche bzw. bei Mehrfachfaltung sogar eine reduzierte Flächenpressung am Bremsbelag erreicht wird. Die unerwünschte Schädigung möglicherweise verwendeter Dämpfungselemente am Bremsbelag kann damit aufgrund geringer Flächenpressung infolge der großen Anlagefläche 7 unterbunden werden.

Die Kolbenwand 3 weist in der Nähe des Randes 4 einen um die Kolbenachse 5 umlaufende radialen Absatz 8 auf, welcher ebenfalls durch eine spanlose Kaltverformung, beispielsweise durch Rollieren, in die Kolbenwand eingebracht wird. Durch den Absatz 8 sowie den umgefalteten Abschnitt 6 am Rand 4 wird auf der außenliegenden Mantelfläche 9 der Kolbenwand 3 eine umlaufende Nut 10 ausgebildet während auf der radialen Innenseite der Kolbenwand 3 eine Schulter 11 entsteht. Im montiertem Zustand des Kolbens 1 innerhalb einer nicht gezeigten hydraulischen Bremse kann die Nut 10 zur Aufnahme eines Dichtringes oder eines sonstigen Dichtelementes dienen. Die Schulter 11 liefert gleichsam eine einfache Möglichkeit zur Abstützung bzw. Verankerung einer ebenfalls nicht gezeigten bremsbelagseitig befestigten Belaghaltefeder, die die Schulter 11 hintergreifen kann.

Allgemein wird der Kolben während seines Herstellprozesses durch spanlose Kaltverformung, insbesondere durch Tiefziehen, eines rondenförmigen Metallzuschnittes konstanter Wandstärke in seine einseitig offene Topfform gebracht. Dabei können grundsätzlich neben der Kaltverformung auch andere geeignete, spanlose Umformverfahren zum Einsatz gelangen. Anschließend werden die mit Faltungen versehenen Abschnitte X und Y sowie der Absatz 8 vorzugsweise in einer Kombination einer Umformbearbeitung mit einem Rollierverfahren in die Kolbenwand 3 bzw. den Kolbenboden 2 spanlos eingeformt. Analog dazu können selbstverständlich auch andere entsprechende Kaltverformungsverfahren angewendet werden. Der weitere Vorteil dieser Kaltverformungsverfahren liegt in der Kaltverfestigung in den umgeformten Kolbenwandabschnitten. Durch die geometrische Ausbildung (Faltung) und Kaltverfestigung des Kolbenmaterials wird trotz einer Materialbeanspruchung infolge der Verformung während des Herstellprozesses, die erforderliche Festigkeit sowie Steifigkeit des Kolbens erreicht. Dies gilt in besonderem Maße für die mit Faltungen versehenen Abschnitte X und Y. Daraufhin wird die bremsbelagseitige Stirnfläche des Randes 4 - vorzugsweise spanend - nachbearbeitet, so daß eine glatte Anlagefläche 7 entsteht, an der der Bremsbelag flächig anliegen kann. Optional kann auch die Nut 10 noch einer mechanischen Nachbearbeitung unterzogen werden, um deren Maßgenauigkeit sicherzustellen.

Gegenüber einem Gußkolben ergeben sich weitere Vorteile wie beispielsweise eine Gewichtsreduzierung um über 100 g pro Kolben, da der kaltverformte Kolben an die Belastungsbedingungen angepaßt sehr dünnwandig gestaltet werden kann. Darüber hinaus fallen beim kaltverformten Kolben Lunker- und Porositätsprobleme weg, wie sie bei Gußkolben auftreten. Als bevorzugten Kolbenwerkstoffe für den neuartigen Kolben sollten Stahl oder Niro-Materialien Verwendung finden. Je nach Anwendungsfall ist auch der Einsatz weiterer metallischer Werkstoffe wie z. B. von Nicht-Edelmetallen oder Leichtmetallen (Aluminium) denkbar.

## Patentansprüche

1. Kolben (1) für einen hydraulischen Druckraum, der als einseitig offener topfförmiger Hohlzylinder gestaltet ist und aus einem Metallzuschnitt konstanter Wandstärke in einem Umformverfahren hergestellt ist, mit einem von hydraulischem Druck beaufschlagbaren Boden (2) und mit einer Kolbenwand (3), die an ihrem offenen Ende in einen Rand (4) übergeht, der eine kreisringförmige Anlagefläche (7) aufweist, wobei der Kolben (1) zumindest einen gefalteten Abschnitt (X, Y) aufweist, in dem die Dicke der Kolbenwand bzw. des Bodens gegenüber der Dicke der übrigen Kolbenwand bzw. des Bodens erhöht ist und der mehrfachen Wandstärke des Metallzuschnitts entspricht, **dadurch gekennzeichnet, daß** der Rand (4) am offenen Kolbenende einen um die Kolbenachse (5) umlaufenden gefalteten Abschnitt (X) mit einer mehrfachen Wandstärke des Metallzuschnitts aufweist.

2. Kolben nach Anspruch 1, **dadurch gekennzeichnet, daß** der Rand (4) zumindest an seiner Anlagefläche (7) durch eine mechanische Nachbearbeitung geglättet ist.

3. Kolben (1) für einen hydraulischen Druckraum, der als einseitig offener topfförmiger Hohlzylinder gestaltet ist und aus einem Metallzuschnitt konstanter Wandstärke in einem Umformverfahren hergestellt ist, mit einem von hydraulischem Druck beaufschlagbaren Boden (2) und mit einer Kolbenwand (3), die an ihrem offenen Ende in einen Rand (4) übergeht, der eine kreisringförmige Anlagefläche (7) aufweist, wobei der Kolben (1) in seinem Übergangsbereich zwischen dem Boden (2) und der Kolbenwand (3) einen um die Kolbenachse (5) umlaufenden gefalteten Abschnitt (Y) aufweist, in dem die Dicke der Kolbenwand bzw. des Bodens gegenüber der Dicke der übrigen Kolbenwand bzw. des Bodens erhöht ist und der mehrfachen Wandstärke des Metallzuschnitts entspricht, **dadurch gekennzeichnet, dass** der Boden (2) gewölbt ausgeführt ist, wobei die außenliegende Fläche des Bodens eine konvexe Wölbung aufweist, so dass im gefalteten Abschnitt (Y) die dreifache Wandstärke des Metallzuschnitts vorliegt.

4. Kolben nach einem der vorhergehenden Ansprüche, **dadurch gekennzeichnet, daß** die Kolbenwand (3) einen radialen nach innen eingeformten Absatz (8) aufweist.

5. Kolben nach den Ansprüchen 1 und 4, **dadurch gekennzeichnet, daß** die Kolbenwand (3) an ihrer außenliegenden Mantelfläche eine um die Kolbenachse (5) umlaufende Nut (10) aufweist, die vom Absatz (8) und einem umgefalteten Abschnitt (6) am Rand (4) begrenzt wird.

6. Kolben nach einem der vorhergehenden Ansprüche, **dadurch gekennzeichnet, daß** der Kolben (1) als Bremskolben für eine hydraulische Bremse ausgebildet ist.

## Claims

1. Piston (1) for a hydraulic pressure chamber which is configured as a bowl-shaped hollow cylinder that is open on one side and is made from a metal blank of a constant wall thickness in a forming operation, including a bottom (2) to which hydraulic pressure is applicable and a piston wall (3) which, at its open end, passes over into a rim (4) that has a circular abutment surface (7), in which case the piston (1) includes at least one folded portion (X, Y) where the thickness of the piston wall or of the bottom is increased compared to the thickness of the remaining piston wall or of the bottom and corresponds to several times the wall thickness of the metal blank,
**characterized in that** the rim (4) at the open piston end includes a circumferential folded portion (X) about the piston axis (5) with a wall thickness that is several times the wall thickness of the metal blank.

2. Piston as claimed in claim 1,
**characterized in that** the rim (4) at least at its abutment surface (7) is smoothened by a machining operation.

3. Piston (1) for a hydraulic pressure chamber which is configured as a bowl-shaped hollow cylinder that is open on one side and is made from a metal blank of a constant wall thickness in a forming operation, including a bottom (2) to which hydraulic pressure is applicable and a piston wall (3) which, at its open end, passes over into a rim (4) that has a circular abutment surface (7), in which case the piston (1) in its transition area between the bottom (2) and the piston wall (3) includes a circumferential folded portion (Y) about the piston axis (5) in which the thickness of the piston wall or the bottom is increased compared to the thickness of the remaining piston wall of the bottom and which corresponds to several times the wall thickness of the metal blank,
**characterized in that** the bottom (2) has a curved design and the outward surface of the bottom has a convex curvature so that the wall thickness in the folded portion (Y) is three times the wall thickness of the metal blank.

4. Piston as claimed in any one of the preceding claims,
**characterized in that** the piston wall (3) includes a radial, inwards shaped step (8).

5. Piston as claimed in claims 1 and 4,
**characterized in that** the piston wall (3) at its outward periphery includes a circumferential groove (10) about the piston axis (5), which groove is limited by the step (8) and by a folded portion (6) at the rim (4).

6. Piston as claimed in any one of the preceding claims,
**characterized in that** the piston (1) is designed as a brake piston for a hydraulic brake.

## Revendications

1. Piston (1) pour une chambre sous pression hydraulique, qui est conçu sous la forme d'un cylindre creux en forme de pot ouvert d'un côté et est fabriqué par un procédé de déformation à partir d'un flan métallique d'épaisseur de paroi constante, avec un fond (2) qui est soumis à une pression hydraulique et avec une paroi de piston (3) qui à son extrémité ouverte se prolonge par un bord (4) qui présente une surface de contact (7) en forme d'anneau circulaire, le piston (1) présentant au moins un segment (X, Y) plié dans lequel l'épaisseur de la paroi de piston ou du fond est augmentée par rapport à l'épaisseur du reste de la paroi de piston ou du fond, et qui correspond à plusieurs fois l'épaisseur de paroi du flan métallique, **caractérisé en ce que** le bord (4) présente à l'extrémité de piston ouverte un segment (X) plié, entourant l'axe de piston (5), avec une épaisseur de paroi multiple de celle du flan métallique.

2. Piston selon la revendication 1, **caractérisé en ce que** le bord (4) est lissé au moins sur sa surface de contact (7) par une rectification mécanique.

3. Piston (1) pour une chambre sous pression hydraulique, qui est conçu sous la forme d'un cylindre creux en forme de pot ouvert d'un côté et est fabriqué par un procédé de déformation à partir d'un flan métallique d'épaisseur de paroi constante, avec un fond (2) qui est soumis à une pression hydraulique et avec une paroi de piston (3) qui à son extrémité ouverte se prolonge par un bord (4) qui présente une surface de contact (7) en forme d'anneau circulaire, le piston (1) comportant, dans sa zone de transition entre le fond (2) et la paroi de piston (3), un segment (Y) plié entourant l'axe de piston (5), dans lequel l'épaisseur de la paroi de piston ou du fond est augmentée par rapport à l'épaisseur du reste de la paroi de piston ou du fond, et qui correspond à plusieurs fois l'épaisseur de paroi du flan métallique, **caractérisé en ce que** le fond (2) est réalisé bombé, la surface située à l'extérieur du fond présentant une courbure convexe, ce qui fait que dans le segment plié (Y) l'épaisseur de paroi est trois fois supérieure à celle du flan métallique.

4. Piston selon l'une quelconque des revendications précédentes, **caractérisé en ce que** la paroi de piston (3) présente un gradin (8) radial, creusé vers l'intérieur.

5. Piston selon les revendications 1 et 4, **caractérisé en ce que** la paroi de piston (3) présente, sur sa surface d'enveloppe située à l'extérieur, une rainure (10) entourant l'axe de piston (5), laquelle est limitée par le gradin (8) et un segment (6) replié sur le bord (4).

6. Piston selon l'une quelconque des revendications précédentes, **caractérisé en ce que** le piston (1) est réalisé sous la forme d'un piston de frein pour un frein hydraulique.
